# EUROPEAN PATENT SPECIFICATION

(11) **EP 3 569 342 B1**
(45) Date of publication and mention of the grant of the patent: **26.11.2025**
(21) Application number: 18382339.2
(22) Date of filing: 17.05.2018
(51) Int. Cl.: B23K 9/04, B23K 35/38, B23K 9/29, B23K 9/23, B23K 9/173, B23K 9/167, B23K 9/09, B23K 9/095, C21D 9/50, B23K 103/14

(54) **PROCESS FOR THE LAYER-BY-LAYER MANUFACTUR OF PARTS IN TI6AL4V BY MEANS OF COXIAL ARC WELDING TECHNOLOGIES**
VERFAHREN ZUR SCHICHTWEISEN HERSTELLUNG VON TEILEN AUS TI-6AL-4V MITTELS KOAXIALER LICHTBOGENSCHWEISSTECHNOLOGIEN
PROCÉDÉ DE FABRICATION COUCHE PAR COUCHE DE PIÈCES DANS TI6AL4V AU MOYEN DE TECHNOLOGIES DE SOUDAGE À L'ARC COAXIAL

(43) Date of publication of application: 20.11.2019
(73) Proprietor: LORTEK S. COOP., 20240 Ordizia (Gipuzkoa) (ES); Addilan Fabricación Aditiva, S.L., 48200 Durango (Bizkaia) (ES)
(72) Inventor: ALVAREZ MORO, Pedro, 20240 ORDIZIA (Gipuzkoa) (ES); RODRIGUEZ PEÑA, Nieves, 20240 ORDIZIA (Gipuzkoa) (ES); VÁZQUEZ MARTÍNEZ, Lexuri, 20240 ORDIZIA (Gipuzkoa) (ES); TABERNERO, Iván, 48200 DURANGO (Bizkaia) (ES)
(74) Representative: Galbaian S.Coop.

(56) References cited:
- CN-A- 106 670 623
- US-A1- 2016 167 172
- IV�N TABERNERO ET AL: "Study on Arc Welding Processes for High Deposition Rate Additive Manufacturing", PROCEDIA CIRP, vol. 68, 30 April 2018 (2018-04-30), NL, pages 358 - 362, XP055529827, ISSN: 2212-8271, DOI: 10.1016/j.procir.2017.12.095
- DONOGHUE J ET AL: "The effectiveness of combining rolling deformation with Wire-Arc Additive Manufacture on [beta]-grain refinement and texture modification in Ti-6Al-4V", MATERIALS CHARACTERIZATION, ELSEVIER, NEW YORK, NY, US, vol. 114, 8 February 2016 (2016-02-08), pages 103 - 114, XP029475111, ISSN: 1044-5803, DOI: 10.1016/J.MATCHAR.2016.02.001
- ROBERT PEDERSON: "Microstructure and phase transformation of Ti-6Al-4V", 1 January 2002 (2002-01-01), Lulea, XP055530195, Retrieved from the Internet <URL:https://www.diva-portal.org/smash/get/diva2:991369/FULLTEXT01.pdf>
- CARPENTER TECHNOLOGY: "Titanium Alloy Ti 6Al-4V", 7 January 2000 (2000-01-07), pages 1 - 10, XP093285765, Retrieved from the Internet <URL:https://www.carpentertechnology.com/hubfs/7407324/Material%20Saftey%20Data%20Sheets/Ti%206Al-4V.pdf>

## Description

### Technical Field of the Invention

The present invention relates to a process for obtaining parts in Ti6Al4V titanium alloy, with industrial application fundamentally in the aeronautical sector, by means of an additive process or a "layer-by-layer" manufacturing process. The deposition of overlapping weld beads allows obtaining parts with extrusion geometries or the like. Arc welding processes with coaxial feeding of the wire, which can be implemented both in robotic welding systems and in Cartesian kinematic machines, with trajectory control, are applied.

### Background of the Invention

The layer-by-layer manufacture of metal parts by means of arc welding processes has been known for years. In fact, the first patent (US-1533300-A) entitled "Method of Making Decorative Articles" (Baker, R) dates back to 1925.

The developments made by the company, NORSK Titanium, in the application of arc processes to additive manufacturing technologies stand out today. NORSK Titanium has patented a process that applies plasma welding known as "rapid plasma deposition," in which a special dual-electrode torch and lateral wire feed are used for manufacturing parts by means of superimposing layers of material ("Method and Arrangement for Building Metallic Objects by Solid Freeform Fabrication." Stempfer, F. 2012).

In recent times, Cranfield University in the United Kingdom has performed extensive work in the field of additive manufacturing based on the application of an electric arc to melt the raw material in the form of wire, and it has accumulated vast experience in the application of various arc technologies for manufacturing components in various materials such as steels, aluminum alloys, or titanium alloys, among others.

The closest known state of the art is a doctoral thesis presented by said university in 2012, referring to the development of an additive technology based on arc welding processes, commonly known in the industry as WAAM (Wire and Arc Additive Manufacturing), for the Ti6Al4V alloy using an arc welding process in which the metal transfer is performed at temperatures that are lower than usual, commonly known as CMT (Cold Metal Transfer). Specifically, this dissertation is entitled "Process Control and Development in Wire and Arc Additive Manufacturing" (P.M. Sequeira Almeida, PhD Thesis, Cranfield University, 2012). The main differentiating aspects of the research carried out in said thesis with respect to the previous works are:
- the study of the application of an advanced MIG/MAG welding process such as CMT to the processes for the additive or "layer-by-layer" manufacture of metal alloys that are applicable in the aeronautic industry,
- the development of process control models based on welding process parameters that seek to predict the geometry and the fusion characteristics of the deposited beads,
- the analysis of the generation of residual stresses during a WAAM-type manufacturing process.

Titanium and its alloys are materials that are widely used today in various industrial sectors, particularly in the aerospace industry, the chemical industry, or the biomedical sector, among others. For the aerospace sector, Ti6Al4V alloy is particularly appealing given its excellent specific properties, i.e., a high mechanical strength along with a low density. This alloy makes up more than 50% of the production and industrial use of Ti alloys. Furthermore, it behaves well in hot conditions, maintaining its mechanical properties at high temperatures, and an exceptional resistance to corrosion.

However, the final components in Ti6Al4V are very expensive, which limits their wide-spread industrial implementation. Both the high cost for obtaining the raw material, which involves a very demanding process energy-wise, and the difficulties associated with the subsequent processing of this alloy encountered during machining and/or during high-productivity welding processes, make the final components significantly more expensive. Additionally, it must be considered that Ti alloys have a high reactivity with oxygen, and excellent shielding must therefore be assured during the high-temperature manufacturing processes.

As regards the joining processes, titanium and its alloys are currently welded by means of arc processes such as the process using a tungsten electrode and inert gas (known by its abbreviation, GTAW) or plasma welding (known by its abbreviation, PAW). Electron-beam welding (known by its abbreviation, EBW) is also used in some cases. These joining processes allow compliance with the strictest quality standards. However, all of them involve restrictions associated with the geometry of the part to be welded, the joint design, and the process parameters (speed, vacuum chamber size, ... ), characteristics which significantly limit the productivity of these processes.

As an industrial alternative, welding processes based on a metal electrode and an inert or active gas (known by its abbreviation, GMAW), with higher welding speeds offer higher metal deposition rates. However, titanium and its alloys are historically associated with instabilities during the welding process, with the presence of significant weld spatter, with weld contamination, and with the formation of defects, such as pores, cracks, or undercuts. Therefore, GMAW processes in titanium are traditionally associated with low quality and low efficiency during the deposition process.

From this there emerged, as an alternative, the "cold" CMT welding process which is a variant of the conventional GMAW process developed by the company FRONIUS. The CMT welding process is based on a controlled short circuit metal transfer process which allows reaching a high productivity with high deposition rates, overcoming the conventional difficulties associated with GMAW processes. Furthermore, it has a greater process stability with a drastic reduction of spatters during same, which allows reaching suitable quality levels. Special synergic curves have been developed in CMT for Ti wire fillers optimizing the transfer of molten metal. Despite the advantages described for the CMT welding process, arc stability in the specific case of CMT welding for titanium alloys is affected by the shielding gas used in the torch, it being a crucial parameter for the viability of the additive process.

With respect to the need to improve the profitability of the industrial processing of Ti6Al4V alloy, there is a need to take into consideration that the aeronautic sector is one of the main groups of interest for the promotion of metal additive manufacturing technologies. These technologies constitute a revolution in the development and manufacture of lightweight components with complex geometries and/or new functionalities. The application of additive manufacturing technologies allows reducing the conception, development, and process times of new components, such that it reduces the time for the components to reach the market. Additive manufacturing allows great flexibility in terms of the design of the parts, which allows weight reduction (topology optimization), improvement of the performance or broaden the functionality of a component. Besides, reduced environmental impact and reduced process costs are expected. Additive manufacturing processes are of even greater interest for high added value alloys, such as Ti6Al4V, typically used in aeronautics, where traditional machining processes give rise to high buy to fly ratios. Additive manufacturing processes based on arc welding technologies (WAAM) which allow reaching deposition rates much higher than other additive processes, thereby making them ideal processes for manufacturing parts with large dimensions, stand out among direct metal deposition-based processes.

Document "Study on arc welding processes for high deposition rate additive manufacturing" (Procedia CIRP 68 (2018) 358-362) discloses a method according to the preamble of claim 1, applying a filler metal consisting of a Ti6Al4V alloy wire by means of deposition in the form of multiple overlapping beads in a layer, using pure helium (He) as torch shielding gas.

Document "The effectiveness of combining rolling deformation with Wire-Arc Additive Manufacture on β-grain refinement and texture modification in Ti-6Al-4V" describes the promotion of β grain refinement in Wire-Arc Additive Manufacture of large scale parts, which combines a rolling step sequentially with layer deposition.

Document "Microstructure and phase transformation of Ti-6Al-4V" of Robert Pederson (2002:30. ISSN:1402-1757) describes phase transformations and fatigue properties in Ti-6Al-4V alloy.

### Description of the Invention

The present invention relates to a manufacturing process for the layer-by-layer manufacture of parts in Ti6Al4V titanium alloy by means of coaxial arc welding technologies, i.e., which coaxially apply the filler metal, Ti6Al4V, which comprises depositing the alloy in the form of multiple overlapping beads in each layer using to that end arc welding technologies which coaxially apply the filler metal, Ti6Al4V, in the form of a wire.

The process is performed by means of innovative arc welding technologies with a consumable electrode (i.e., FRONIUS CMT process).

In this context, the application of CMT technologies in WAAM processes offers high process productivity with high deposition rates, less distortion of the parts, higher dimensional precision, and greater process stability with greater voltage arc control.

The advantage of CMT coaxiality includes the ability to change the direction of the trajectory and perform complex 2D trajectories without having to reorient the wire feed and with a constant appearance. This constitutes a simplification and advantage with respect to lateral feed systems.

The layer-by-layer manufacturing process allows obtaining parts with extrusion geometries or the like (with small positive or negative inclinations). The developed process allows manufacturing parts with a wall that is very thick (more than 15 mm) based on superimposing multiple beads in each layer.

In this manner, the invention allows for a manufacturing process which satisfactorily applies an arc welding technology with coaxial filler metal feed, i.e., a stable voltage arc and a process that is free of defects (porosity, lack of fusion, spattering), for manufacturing parts in Ti6Al4V by means of multiple overlapping beads. The developed process allows a homogeneous and controlled growth of the layers in the longitudinal and transverse direction. The electrical parameters of the welding process (voltage, intensity, wire speed, welding speed), the interpass temperature, the degree of overlap between beads, the bead deposition strategy, the gas shielding atmosphere in the case of reactive materials such as titanium alloys, the shielding gas in the welding torch affecting the fusion of the electrode and the shape of the weld beads, are all subject to control. Additionally, the optimization of the mechanical properties of the deposited alloy, Ti6Al4V, requires an additional heat treatment by way of postprocessing the deposited parts, assuring compliance with the main standards associated with the aeronautical sector (AMS 4985C-2003, ISO 5832-3, ASTM F1108, ASTM F1472).

The development of a stable process is determined by the shielding gas used in the torch The viability of the manufacturing process that is based on multiple overlapping beads depends on the exclusive use of a specific type of shielding gas. The use of this gas assures suitable metallurgical bonding between the layers of deposited material, assuring an optimum contact angle between the layers, which likewise allows maintaining high material deposition rates (deposition rates above 2 kg/h for Ti6Al4V alloy) and a homogeneous growth of the layers. The use of pure helium as shielding thereby assures a suitable geometric shape of the deposited beads, as well as sufficient contact between them. The suitable geometric shape of each bead and good contact between them enables layer-by-layer manufacture by means of overlapping beads that are successively deposited. The application of pure helium favours the elimination of defects such as the lack of fusion between successive beads, or the presence of porosity, during the welding process.

The design of the bead deposition strategy, conceived to obtain walls that are very thick by means of overlapping multiple beads, alternating the initial and end points of the bead. This process design allows overlapping weld beads by means of a stable process that is free of spattering and weld defects. Suitable metallurgical bonding between the beads which allows obtaining defect-free parts and a homogeneous growth of layers is assured.

The control of the interpass temperature or cooling time for a controlled and stable growth of the walls, preventing the material from collapse. Control between passes is performed by means of temperature measuring systems (thermocouples) and there is a need to work below a limit value to assure good final properties (after heat treatment). The use of a Ti6Al4V substrate on which the part is manufactured with sufficient rigidity to prevent deformations.

The specifically designed heat treatment which allows compliance with the aeronautics standard currently in force (AMS 4985C-2003, ISO 5832-3, ASTM F1108, ASTM F1472). Specifically, an elastic limit greater than 875 MPa, a tensile strength above 960 MPa, and an ultimate elongation greater than 10%, are achieved.

A stable process for depositing titanium alloys by means of welding technologies with coaxial filler metal feed (CMT or other processes) had not been achieved in the processes of the state of the art. The stability that is achieved and the deposition strategy designed allow obtaining a wall that is very thick (more than 15 mm). Interest in this technology for additive manufacturing (WAAM) applications is determined by the high wire deposition rates achieved, with geometric flexibility that is derived from the coaxiality of the torch and essential for manufacturing parts with large dimensions, and the thermal characteristics of the CMT process, i.e., the "cold welding process", that is associated with fewer thermal distortions and residual stresses of the parts. Additionally, a heat treatment specific for parts manufactured by means of WAAM has been developed. At present, the technique developed by other authors consists of adding a plastic deformation step after the deposition step in order to obtain suitable mechanical properties; this, however, is uncommon from an industrial viewpoint.

Additionally, the invention contemplates the following particularly advantageous embodiments:
- The type of solution used to achieve protection and prevent oxidation (protective chamber). A chamber specifically designed to assure gas shielding (by means of using an inert gas) of the part to be manufactured has been considered in this invention. Although the chamber assures a minimum oxygen content of less than 2000 ppm in the part, other solutions could be developed in this regard.
- The use of thermocouples to strictly control the temperature between passes.
- The use of a forced (convection) cooling system and/or a heat dissipation system (cooled plates) to reduce the time between passes -The use of a different axis positioner for the simultaneous manufacture of mirror parts which minimize and compensate for deformations.
- The use of CAM systems to automate trajectory definition in each layer.

The possibility of the process using a robotic welding system or a Cartesian kinematic machine is contemplated. In robotic systems, the robot allows controlling the height of the arc in real time and allows said arc to be automatically adjusted in height along the different layers and through arc signals (voltage, intensity). In this sense, process and geometric parameters (overlapping between beads) are defined to achieve a planar homogeneous growth of layers along the longitudinal and transverse section (for multiple overlapping beads). In multiple beads, a single gas (100% helium) which enables a viable process has been defined for the CMT process. The process includes defining the heat treatment to be applied in order to obtain mechanical properties required by the standards of the aeronautical sector.

Likewise, the process contemplates using a closed chamber in which an inert gas flow is circulated and in which an initial gas purge can be performed to prevent environmental oxygen capture. The process is performed in a closed chamber using an inert gas flow with an initial gas purge, such that environmental oxygen capture and sample oxidation are prevented during the deposition and cooling processes. The final oxygen content in the Ti6Al4V parts manufactured by means of this process is less than 2000 ppm (in compliance with the ASTM E1409 and AMS 2249 standards).

It is contemplated for the process to comprise controlling the temperature between passes and/or the time between passes by means of the reading of the change in temperature over time through the placement of suitably distributed thermocouples. The temperature between passes must be limited to a maximum level in any of the two cases to assure the final mechanical properties.

Likewise, a subsequent heat treatment, performed under high vacuum (<10⁻⁴ mbar) and using a maximum holding temperature greater than those temperatures conventionally used in thermal treatments the purpose of which is to reduce the stresses of the structure after manufacture, can be performed. The treatment temperature is less than the β-transus temperature. The post-processing heat treatment temperature is comprised in 750°C<T< β transus. This specifically designed heat treatment allows obtaining the minimum mechanical properties required by the main aeronautics standard for parts in Ti6Al4V (AMS 4985C-2003, ISO 5832-3, ASTM F1108, ASTM F1472). After manufacturing by means of the (layer-by-layer) deposition of molten metal and heat treatment, a preform which is machined into a final shape is obtained.

This heat treatment allows avoiding solutions proposed by other authors, such as the solution developed by the University of Cranfield (mentioned above),and based on improving the mechanical properties of the parts in Ti6Al4V obtained through WAAM by means of a post-processing based on plastically deforming the material after the deposition of each bead. From the industrial viewpoint, the inclusion of a step of plastic deformation after each deposited bead is far less common than thermally treating the parts.

### Description of the Drawings

To complement the description that is being made and for the purpose of helping to better understand the features of the invention according to a preferred practical embodiment thereof, a set of drawings is attached as an integral part of said description in which the following has been depicted with an illustrative and non-limiting character:
Figure 1 shows a schematic elevational view in which the geometry of the electric arc used in an embodiment of the process of the invention is shown.
Figure 2 shows two schematic elevational views of two embodiments corresponding to different deposition strategies according to the process of the invention, in which Figure 2a) shows a case corresponding to a single bead per layer, whereas Figure 2b) shows a case corresponding to three overlapping beads per layer.
Figure 3 shows an elevational detail of the deposition strategy depicted in Figure 2b). The detail of the strategy followed for depositing multiple overlapping beads.

### Preferred Embodiment of the Invention

In the view of the mentioned drawings, it can be seen how in one of the possible embodiments of the invention, the process starts with a material in the form of a wire having a diameter of 0.8-1.2 mm and a feeding system for feeding at a controlled speed. The wire is fed in a continuous and coaxial manner to the electric arc at the end of the welding torch The welding torch moves continuously according to the movements programmed in a robot, or alternatively in a Cartesian coordinate machine. The wire melts and is deposited in the form of weld beads on an initial planar substrate. The horizontal and vertical overlapping of the wire allows making uniform walls of different thickness and height. The use of the suitable shielding gas and the deposition strategy assure the homogeneous growth of the walls. A preform that must be heat-treated and machined to the final shape is obtained after manufacture.

The developed manufacturing process is based on a robotic welding process or a process integrated in a Cartesian coordinate machine, equipped with CMT technology (FRONIUS). Said equipment is robotic equipment for the layer-by-layer manufacture of components with large dimensions in Ti6Al4V. To improve the quality of the parts obtained during this process and to assure compliance with the standard of interest (minimum mechanical properties for the aeronautical industry), a protective chamber which confines the part being made and through which there flows a high-purity inert gas, preferably argon, is designed, such that said chamber serves to shield the part during the additive manufacturing process.

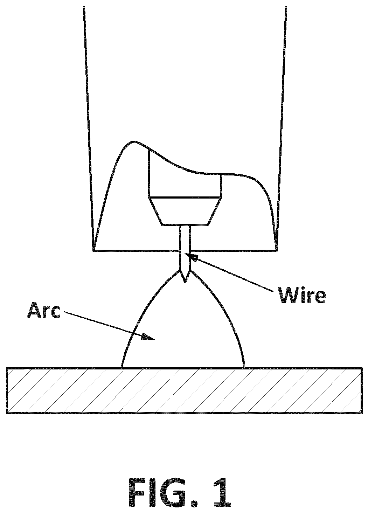

To assure the stability of the process of depositing Ti6Al4V alloy in the CMT technology, work is done with an arc geometry as shown in Figure 1. The process is stable only by means of using a specific shielding gas in the welding torch (specific FRONIUS torch developed for this process: Robacta Drive). The torch gas used is 100% helium.

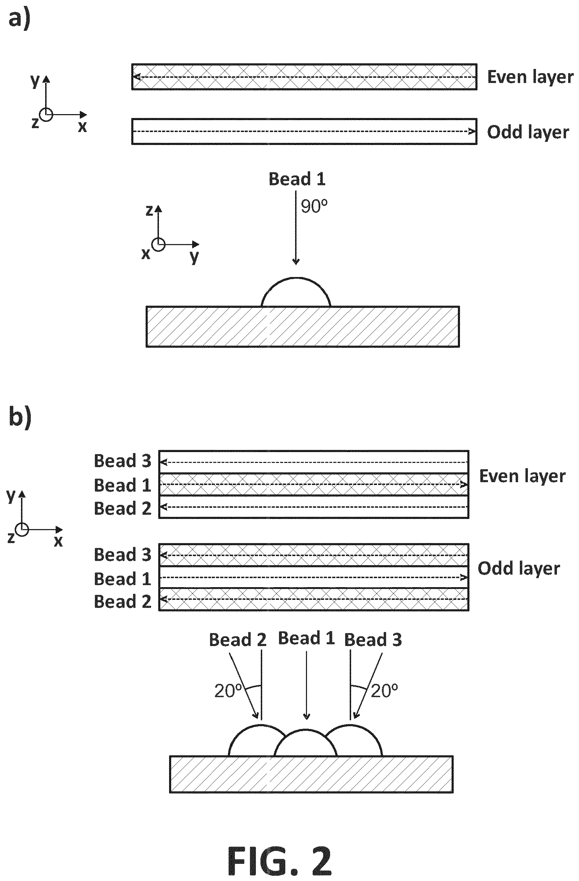

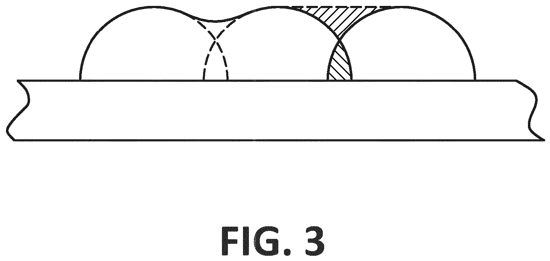

The deposition strategies followed are schematically shown in Figure 2. A detail of the multiple bead strategy is shown in Figure 3. Both strategies are common to the selected welding process.

The application of a subsequent heat treatment, performed under high vacuum (<10⁻⁴ mbar) and using a maximum holding temperature above those temperatures conventionally used in heat treatments the purpose of which is to reduce the residual stresses of the structure after manufacture (>750°C), allows obtaining the minimum mechanical properties required by the main aeronautics standard for parts in Ti6Al4V (AMS 4985C-2003, ISO 5832-3, ASTM F11 08, ASTM F1472). The thermal treatment temperature is lower than the β-transus temperature. After manufacturing by means of the (layer-by-layer) deposition of molten metal and heat treatment, a preform which is machined into a final shape is obtained.

The application of this process allows obtaining components with extrusion geometries with a wall more than 15 mm thick by means of a layer-by-layer manufacturing process.

In view of this description and set of drawings, one skilled in the art will understand that the embodiments of the invention that have been described can be combined in many ways within the object of the invention. The invention has been described according to several preferred embodiments thereof, but for one skilled in the art it will be obvious that many variations can be introduced in said preferred embodiments without exceeding the object of the claimed invention.

## Claims

1. Manufacturing process for the layer-by-layer manufacture of aeronautical parts in Ti6Al4V by means of Cold Metal Transfer (CMT) coaxial arc welding technology, which comprises applying the filler metal consisting of a Ti6Al4V alloy wire coaxially by means of deposition in the form of multiple overlapping beads in each layer, wherein it comprises using pure helium (He) as torch shielding gas, **characterized in that** the process comprises applying a subsequent high-vacuum of < 10⁻⁵ kPa heat treatment with a maximum holding temperature above 750°C and below the β-transus temperature.

2. Process according to claim 1, wherein the process comprises using a shielding chamber with an inert gas flow, where said inert gas is argon.

3. Process according to any of the preceding claims, wherein the process comprises controlling the temperature between passes and/or the waiting time between passes by means of using thermocouples.

## Patentansprüche

1. Herstellungsverfahren zur schichtenweisen Herstellung von Luftfahrtteilen aus Ti6Al4V mittels koaxialer Lichtbogenschweißtechnik mit Kaltmetallübertragung (CMT), welches das Anwenden vom aus einem Ti6Al4V-Legierungsdraht bestehenden Zusatzmetall koaxial mittels der Ablagerung in Form von mehreren überlappenden Schweißraupen in jeder Schicht umfasst, wobei das Verfahren das Verwenden von reinem Helium (He) als Schutzgas für den Brenner umfasst, **dadurch gekennzeichnet, dass** das Verfahren das Anwenden einer anschließenden Hochvakuum-Wärmebehandlung von <10⁻⁵ · kPa mit einer maximalen Halte-Temperatur über 750 °C und unterhalb der β-Transustemperatur umfasst.

2. Verfahren nach Anspruch 1, wobei das Verfahren das Verwenden von einer Schutzkammer mit einem Inertgasstrom umfasst, wobei das genannte Inertgas Argon ist.

3. Verfahren nach einem der vorhergehenden Ansprüche, wobei das Verfahren das Regeln von der Temperatur zwischen den Durchgängen und/oder von der Wartezeit zwischen den Durchgängen mittels Thermoelementen umfasst.

## Revendications

1. Procédé de fabrication couche par couche de pièces aérodynamiques en Ti6Al4V au moyen de technologie de soudage à l'arc coaxial par transfert de métal à froid (CMT), qui comprend l'application coaxiale du métal d'apport, constitué d'un fil en alliage Ti6Al4V, par dépôt sous forme de multiples cordons superposés dans chaque couche, dans lequel il comprend l'utilisation d'hélium (He) pur comme gaz de protection de la torche, **caractérisé en ce que** le procédé comprend l'application ultérieure d'un traitement thermique sous vide poussé de <10⁻⁵ kPa avec une température de maintien maximale supérieure à 750 °C et inférieure à la température de β-transus.

2. Procédé selon la revendication 1, dans lequel le procédé comprend l'utilisation d'une chambre de protection avec un flux de gaz inerte, où ledit gaz inerte est de l'argon.

3. Procédé selon l'une quelconque des revendications précédentes, dans lequel le procédé comprend le contrôle de la température entre des passages et/ou du temps d'attente entre des passages au moyen de thermocouples.
